(19) Europäisches Patentamt
European Patent Office
Office européen des brevets

(11) EP 0 870 777 B1

# (12) FASCICULE DE BREVET EUROPEEN

(45) Date de publication et mention de la délivrance du brevet:
**24.09.2003 Bulletin 2003/39**

(51) Int Cl.[7]: **C08F 4/58**, C08F 297/02

(21) Numéro de dépôt: **98400579.3**

(22) Date de dépôt: **11.03.1998**

(54) **Procédé et système d'amorçage pour la (co)polymérisation anionique de monomères (méth)acryliques, vinylaromatiques et/ou diéniques**

Initiatorsystem und Verfahren zur anionischen (Co)Polymerisation von (Meth)Acryl-, vinylaromatischen und/oder Dien- Monomeren

Initiator system and process for the anionic (co)polymerisation of (meth)acrylic, vinylaromatic and/or dienic monomers

(84) Etats contractants désignés:
**BE CH DE ES FR GB IT LI NL SE**

(30) Priorité: **10.04.1997 FR 9704467**

(43) Date de publication de la demande:
**14.10.1998 Bulletin 1998/42**

(73) Titulaire: **Atofina**
**92800 Puteaux (FR)**

(72) Inventeurs:
- **Zundel, Thomas**
  **68480 Durmenach (FR)**
- **Teyssie, Philippe**
  **4121 Neuville en Condroz (BE)**
- **Jerome, Robert**
  **4040 Tilff (BE)**
- **Navarro, Christophe**
  **64520 Bidache (FR)**

(74) Mandataire: **Ohresser, François**
**Atofina,**
**Département Propriété Industrielle,**
**4-8, cours Michelet,**
**La Défense 10**
**92091 Paris La Défense Cedex (FR)**

(56) Documents cités:
**EP-A- 0 599 671** **DE-C- 4 234 898**
**US-A- 3 560 469** **US-A- 4 136 105**
**US-A- 5 527 751** **US-A- 5 605 991**

- **DATABASE WPI Section Ch, Week 9325 Derwent Publications Ltd., London, GB; Class A12, AN 93-200539 XP002089787 & JP 05 125134 A (ASAHI CHEM IND CO LTD) , 21 mai 1993**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 870 777 B1

Printed by Jouve, 75001 PARIS (FR)

## Description

La présente invention concerne un système d'amorçage pour la (co)polymérisation anionique de monomères (méth)acryliques, vinylaromatiques et/ou diéniques ; ce nouveau système d'amorçage s'avère très performant, car il met en jeu des conditions expérimentales douces au niveau de la température, avec un rendement pratiquement quantitatif, et il permet, par exemple, la synthèse aisée de poly(méthacrylate de méthyle) (PMMA) à teneur élevée en triades isotactiques (d'au moins 75 %), de masse molaire moyenne en nombre ($\overline{Mn}$) élevée tout en conservant un indice de polymolécularité $I_p$ ($\overline{Mw}/\overline{Mn}$) étroit, et aussi la polymérisation contrôlée des acrylates, notamment des acrylates primaires et la synthèse de copolymères séquencés comportant des blocs de PMMA isotactique et la synthèse de polydiènes à teneur élevée en microstructure -1,4.

Dans la littérature, les systèmes d'amorçage permettant la polymérisation anionique de méthacrylates possédant un taux de triades isotactiques élevé présentent tous une limitation. Celle-ci se situe soit au niveau des rendements, soit au niveau des caractéristiques principales des polymères (Ip, $\overline{Mn}$, tacticité). Les conditions expérimentales sont en général drastiques, nécessitant notamment une température très basse (-78°C). Ainsi, dans Polymer Journal, Vol 17, N° 8, pages 977-980 (1985), et dans Polymer Journal. Vol 18, N° 12, pages 1037-1047, HATADA et al rapportent que t-$C_4H_9MgBr$ préparé dans l'éther diéthylique n'a pas provoqué de réaction secondaire dans la polymérisation du méthacrylate de méthyle dans le toluène à -78°C et a formé un polymère hautement isotactique avec un indice de polymolécularité étroit. Toutefois, ce procédé est limité aux très basses températures et ne permet pas la synthèse de PMMA ayant des masses molaires très élevées.

Il existe donc, dans ce domaine, un réel besoin en un assouplissement des contraintes opératoires et en une amélioration des procédés ou des caractéristiques des produits.

Le document US 3 560 469 concerne un procédé de polymérisation anionique du styrène dans lequel un polysiloxane est utilisé en combinaison avec un catalyseur alkyle sodium.

La présente invention a donc d'abord pour objet un système d'amorçage pour la (co)polymérisation anionique de monomères (méth)acryliques, vinylaromatiques et/ou diéniques, comprenant le produit de réaction

a) d'au moins un siloxane cyclique de formule I :

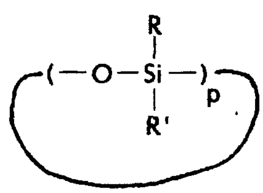

(I)

dans laquelle R et R', identiques ou différents, représentent, chacun, un radical alkyle, linéaire ou ramifié, en C1-C6 ou bien un radical aryle, un radical arylalkyle ou alkylaryle dans lesquels le groupe alkyle a de 1 à 6 atomes de carbone et p est un nombre entier de 3 à 6 et

b) d'au moins un composé organométallique de réactivité suffisante pour ouvrir le cycle siloxane, le rapport molaire r = no/n, dans lequel $n_o$ est le nombre de moles de sites actifs dérivant du composé organométallique réagissant avec n moles de composé siloxane cyclique, est compris entre 0,8p et 2p, p représentant le nombre de motifs siloxane.

Dans la formule (I) du siloxane cyclique, R et R', identiques ou différents, représentent, de préférence, un radical méthyle et p, représentant le nombre de motifs siloxane, est, de préférence, égal à 3 ou 4. Un siloxane cyclique, appelé Dp avec D = —(R)(R')Si—O— et p - nombre de ces motifs, particulièrement préféré, est l'héxaméthylcyclotrisiloxane ($D_3$) ou l'octaméthylcyclotétrasiloxane ($D_4$).

Le composé organométallique peut être choisi en particulier parmi les composés

(1) de formule (II)

$$(R^1)_u—M \qquad \text{(II)}$$

dans laquelle :

- $R^1$ représente un radical alkyle à chaîne ramifiée contenant 3 à 6 atomes de carbone ; ou un radical aryle à un ou plusieurs cycles, éventuellement substitué ; ou un radical alcényle en $C_2$-$C_6$ substitué par aryle ou alkylaryle ; ou un radical alkyle, linéaire ou ramifié, contenant 1 à 6 atomes de carbone, substitué par au moins un groupe phényle, ou un radical alkylaryle dans lequel le groupe alkyle a de 1 à 8 atomes de carbone ;
- M désigne un métal alcalin ou alcalino-terreux, la valence u étant respectivement de 1 ou 2.

(2) les composés difonctionnels de formule (III):

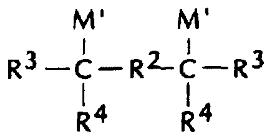

(III)

dans laquelle :

- M' est un métal alcalin ;
- $R^2$ représente un radical organique divalent, aliphatique, cycloaliphatique, aromatique ou comportant au moins un groupement cycloaliphatique ou aromatique, $R^2$ pouvant comporter des substituants ;
- $R^3$ et $R^4$ représentent chacun indépendamment un radical organique monovalent, aliphatique, cycloaliphatique, aromatique ou comportant au moins un groupement cycloaliphatique ou aromatique, $R^3$ et $R^4$ pouvant comporter des substituants ;

(3) les composés silylés monofonctionnels de formule (IV) :

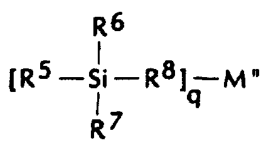

(IV)

dans laquelle :

- $R^5$, $R^6$, $R^7$ représentent, chacun, indépendamment, un radical alkyle, linéaire ou ramifié, contenant 1 à 6 atomes de carbone ;
- $R^8$ représente un radical alkylène, linéaire ou ramifié, contenant 1 à 6 atomes de carbone ;
- M" désigne un métal alcalin ou alcalino-terreux, la valence q étant respectivement de 1 ou 2 ; et

(4) les composés silylés difonctionnels de formule (V):

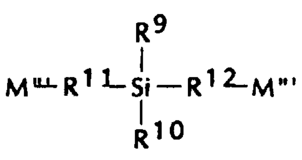

(V)

dans laquelle :

- $R^9$ et $R^{10}$ représentent, chacun, indépendamment, un radical alkyle, linéaire ou ramifié, contenant 1 à 6 atomes de carbone ;
- $R^{11}$ et $R^{12}$ représentent, chacun, indépendamment, un radical alkylène, linéaire ou ramifié, contenant 1 à 6 atomes de carbone ; et

- M''' désigne un métal alcalin.

Les amorceurs monofonctionnels (1) de formule (II) peuvent être choisis, en particulier, parmi le sec.-butyllithium et le tert.-butyllithium.
Quant aux composés difonctionnels (2) de formule (III), ils peuvent être choisis notamment parmi le 1,1,4,4-tétraphényl-1,4-dilithio-butane et le 1,1,4,4-tétraphényl-1,4-disodiobutane.
Dans les formules (IV) et (V) ci-dessus, on préfère que $R^5$, $R^6$, $R^7$, $R^9$ et $R^{10}$ représentent, chacun, un méthyle, que $R^8$, $R^{11}$ et $R^{12}$ représentent, chacun, un méthylène, et que M'' et M''' représentent, chacun, le lithium.
On peut aussi utiliser des précurseurs difonctionnels, tels que le naphtalène lithium, le naphtalène sodium et le naphtalène potassium.
Le système d'amorçage selon l'invention est généralement obtenu par réaction d'au moins un siloxane cyclique Dp avec au moins un composé organométallique, à température ambiante, sous azote, dans un solvant du type apolaire tel que le toluène. Le mécanisme de cette réaction est une addition nucléophile du composé organométallique sur l'atome de silicium électrophile, provoquant ainsi l'ouverture du cycle.
A titre d'exemple, avec n moles de siloxane cyclique $D_3$ (3 motifs siloxane) et $n_o$ moles de sites actifs dérivant du composé organométallique $R^1M$ réagissant avec le siloxane cyclique $D_3$, la réaction est la suivante :

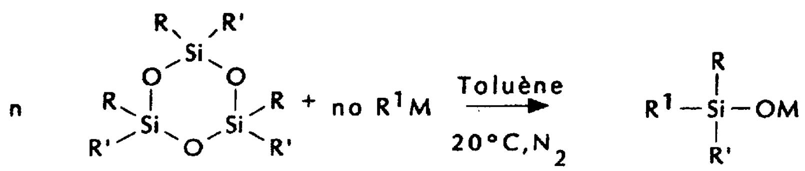


$D_3$ S - silanolate

Le milieu étant apolaire, on pense qu'il existe des espèces mixtes associées de la forme $xR^1M$ et 6-x R1—D—M avec D :

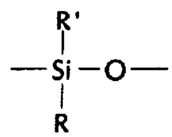

avec $1 \leq x \leq 4$.
Du fait de l'existence de plusieurs espèces associées mixtes, la préparation du système d'amorçage demande une durée, à la température ambiante, suffisante pour permettre d'atteindre l'équilibre favorable à l'espèce thermodynamiquement la plus stable. Cette durée peut atteindre, par exemple, 20 h.
Le choix du rapport molaire r = no/n permet de contrôler le rapport molaire (R) de l'espèce silanolate (S) obtenue par rapport au composé organométallique agissant comme amorceur (A) et constitue, par conséquent, un paramètre intervenant dans cet équilibre.
La quantité de motifs siloxane p doit être suffisante pour permettre la formation d'un complexe avec le centre actif de polymérisation et, ainsi, stabiliser ce dernier.
La quantité de motifs siloxane p dépend du composé organométallique choisi et du ou des monomères à polymériser. Le rapport molaire no/n est ainsi compris entre 0,8p et 2p.
On peut citer avantageusement les systèmes d'amorçage suivants : celui préparé à partir de sec.-butyllithium (sec.-BuLi) et d'hexaméthylcyclotrisiloxane ($D_3$), celui préparé à partir de tert-butyllithium (tert.-BuLi) ou de triméthylsilylméthyllithium (TMSM-Li) et d'hexaméthylcyclotrisiloxane ($D_3$), celui préparé à partir de sec.-BuLi et d'octaméthylcyclotétrasiloxane ($D_4$) et celui préparé à partir de tert.-BuLi ou de TMSM-Li et de $D_4$.
La présente invention porte également sur un procédé de (co)polymérisation anionique de monomères (méth) acryliques, vinylaromatiques et/ou diéniques, caractérisé par le fait qu'on conduit la polymérisation en présence d'un système d'amorçage tel que défini ci-dessus.
La température de polymérisation peut varier entre -78°C et +25°C environ et, de préférence, elle est inférieure à -20°C environ pour les acrylates et d'environ 0°C pour les méthacrylates.

La polymérisation, réalisée en présence du système d'amorçage selon l'invention, a lieu, de préférence, en l'absence d'humidité et d'oxygène, et en présence d'au moins un solvant aprotique, polaire ou apolaire, de préférence majoritairement apolaire, choisi, de préférence, parmi le benzène, le toluène, l'éthylbenzène, le tétrahydrofuranne, le diglyme, le tétraglyme, l'orthoterphényle, le biphényle, la décaline, la tétraline ou leurs mélanges ; on peut utiliser avantageusement le toluène ou l'éthylbenzène. On peut aussi utiliser un mélange toluène-tétrahydrofuranne ou éthylbenzène-tétrahydrofuranne pouvant contenir jusqu'à 10% en volume de tétrahydrofuranne.
La polymérisation selon l'invention est possible en réacteurs du type batch ou tubulaire, mais elle n'est pas limitée à ceux-ci ; elle peut être isotherme ou adiabatique.
Elle peut aussi avoir lieu, en continu, comme décrit dans la demande de brevet EP-A-0749987 et, dans ce cas, le ou les monomère(s) à polymériser et le système d'amorçage sont d'abord mélangés dans un micromélangeur (par exemple, micromélangeur de type cyclone ou à jets tangentiels, du type à jets d'impacts), puis le mélange est injecté dans le réacteur de (co)polymérisation. La durée du séjour du ou des monomère(s) et du système d'amorçage dans le micromélangeur est inférieure au temps de (co)polymérisation.
Par le procédé selon l'invention, on peut former des homopolymères, des copolymères statistiques, des copolymères séquencés et des polymères ou des copolymères en étoile.
Les monomères que l'on peut (co)polymériser par le procédé de l'invention sont choisis notamment dans le groupe comprenant les monomères (méth)acryliques, vinylaromatiques et diéniques.
Le terme "monomère (méth)acrylique", tel qu'employé ci-dessus, signifie un monomère choisi parmi les (méth) acrylates des formules respectivement :

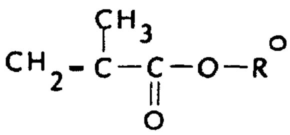

et

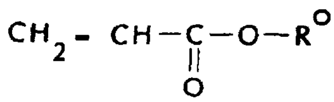

dans lesquelles R° est choisi parmi les radicaux alkyle en $C_1$-$C_{18}$, linéaires ou ramifiés, primaires, secondaires ou tertiaires, cycloalkyle en $C_5$-$C_{18}$, alcoxyalkyle et alkylthioalkyle dans lesquels le groupe alkyle, linéaire ou ramifié, a de 1 à 8 atomes de carbone, aryle et arylalkyle, ces radicaux étant éventuellement substitués par au moins un atome de fluor et/ou au moins un groupe hydroxyle après protection de ce groupe hydroxyle ; les (méth)acrylates de glycidyle, de norbomyle, d'isobornyle, les mono- et di-(alkyl en $C_1$ -$C_{18}$)-(méth)acrylamides.
Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.
Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.
Par monomère vinylaromatique au sens de la présente invention, on entend par exemple un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl diméthyl-3,4-styrène, le tert.-butyl-3-styrène et le vinyl-1-naphtalène.
Par monomère diénique, on entend un diène choisi par exemple parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbomène, le 5-(2-propényl)-2-norbomène, le 5-(5-hexényl)-2-norbornène.
En particulier, le système d'amorçage selon l'invention permet de polymériser le PMMA à des températures se situant aux environs de 0°C et même à des températures pouvant atteindre au moins 20°C pour obtenir du PMMA à triades isotactiques élevées (pouvant atteindre au moins 75 %), de forte masse avec un indice de polydispersité pouvant être faible (1,1-1,3).
Le PMMA à teneur élevée en triades isotactiques présente l'avantage de pouvoir s'associer à du PMMA syndiotactique ou radicalaire ou à un copolymère séquencé comprenant une séquence de PMMA syndiotactique. Les stéréocomplexes formés par ces mélanges ont la particularité de posséder des propriétés physiques différentes des

deux polymères constitutifs. Les propriétés thermiques mises en évidence par analyses thermiques, montrent la disparition des deux températures de transition (Tg) des homopolymères. La formation de ces stéréocomplexes engendre dans le mélange une réticulation physique des chaînes de tacticités différentes entre elles. Ceci a des conséquences importantes sur les propriétés mécaniques des nouveaux matériaux.

Le système d'amorçage selon la présente invention permet également :

- d'effectuer la polymérisation contrôlée des acrylates primaires ;
- d'effectuer la synthèse de copolymères à séquences (méth)acryliques par exemple poly(méthacrylate de méthyle-b-acrylate d'alkyle) ;
- de réaliser un amorçage quasi-quantatif des monomères dans le toluène pur.

Le système d'amorçage selon la présente invention peut également être utilisé pour la polymérisation des monomères diéniques et vinylaromatiques ayant une polymolécularité étroite. Ces polymères étant vivants, on peut introduire d'autre monomères comme le méthacrylate de méthyle après la polymérisation d'un monomère diénique ou vinylaromatique pour préparer des copolymères séquencés qui ont un indice de polymolécularité étroit.

Dans les polymères biséquencés que l'ont peut obtenir selon l'invention, par exemple Poly(MMA-b-nBuA) ; poly(isoprène ou butadiène ou styrène-b-MMA), le bloc de PMMA comporte avantageusement une teneur en triades isotactiques au moins égale à 75 %.

On peut noter, en particulier, qu'en utilisant le système d'amorçage selon l'invention, il est possible de préparer des copolymères séquencés diéniques ou vinylaromatiques-(méth)acryliques sans qu'il soit nécessaire d'ajouter, après la formation de la première séquence polydiénique ou polyvinylaromatique, un composé, tel que le 1,1-diphényléthylène, pour diminuer la réactivité des carbanions à l'extrémité des chaînes polydiéniques ou polyvinylaromatiques avant l'amorçage des (méth)acrylates (technique dite du "end-capping").

Les exemples suivants illustrent la présente invention sans toutefois en limiter la portée. Dans ces exemples, les abréviations suivantes ont été utilisées :

- MMA et PMMA = méthacrylate de méthyle et poly(méthacrylate de méthyle)
- nBuA = acrylate de n-butyle
- sec.-BuLi = sec.-butyllithium
- tert.-BuLi = tert.-butyllithium
- n-Buli = n butyllithium
- D3 = hexaméthylcyclotrisiloxane

**Exemples 1 à 6 :Polymérisation du MMA**

*Mode opératoire général*

(A) Préparation de la solution d'amorçage

Dans un ballon de 500 ml sous circulation de $N_2$, on introduit du $D_3$. On ajoute ensuite à l'aide d'une seringue du toluène préalablement séché et purifié. Lorsque les cristaux de D3 sont dissous, on rajoute alors du sec-BuLi. Le mélange est maintenu sous agitation et sous $N_2$ pendant 20 heures à température ambiante. On obtient le système d'amorçage "A".

(B) Polymérisation

Dans un réacteur de 1 litre, préalablement purgé à l'azote, on introduit le toluène nécessaire à la réaction, purifié par une solution de 1,1-diphénylhexyllithium.

La solution d'amorçage préalablement préparée en (A) est introduite à l'aide d'une seringue et la température du milieu réactionnel est alors abaissée à 0°C. On introduit alors le monomère à la seringue, sous agitation violente. Après 1 h de polymérisation, la réaction est terminée avec du méthanol.

La détermination des masses molaires moyennes en nombre ($\overline{Mn}$) ainsi que des indices de polymolécularité est effectuée par chromatographie d'exclusion stérique calibrée par du polystyrène.

La tacticité des chaînes de polymère est déterminée par spectroscopie de résonance magnétique nucléaire du proton.

L'efficacité f du système d'amorçage est le rapport $\overline{Mn}$ théorique/$\overline{Mn}$ réelle.

**Exemples 1 à 3 : Polymérisation du MMA**

On opère comme indiqué avec les conditions opératoires suivantes :
Quantités pour préparer le système d'amorçage A :

Exemple 1 : s-BuLi = 42,82 mM ; 31,5 ml
$D_3$ = 14,76 mM ; 3,29 g.
Toluène = 60,1 ml

On utilise 66,5 ml de cette solution.

Exemple 2 : s-BuLi = 29,94 mM; 21,03 ml
$D_3$ = 10,36mM;2,3g. g.
Toluène = 42 ml

On utilise toute la solution.

Exemple 3 : s-BuLi = 95,16 mM; 61,7 ml
$D_3$ = 32,81 mM ; 7,3 g.
Toluène = 134 ml

On utilise toute la solution.
[MMA] = 0,5 M
r = $n_0$ sec-BuLi/$nD_3$ - 2,9
Durée de polymérisation = 1h
ρ = rendement
Les résultats sont rapportés dans le Tableau 1.

Tableau 1

| Exemple | $\overline{Mn}_{exp}$ (g/mol) | Ip | ρ (%) | f (%) | Iso (%) |
|---|---|---|---|---|---|
| 1 | 65800 | 2,1 | 100 | 61 | 90 |
| 2 | 42710 | 1,5 | 100 | 89 | 92 |
| 3 | 21870 | 1,4 | 99,6 | 57 | 92 |

Les résultats montrent que le système d'amorçage peut être utilisé pour la polymérisation anionique du MMA dans le toluène à 0°C. Les PMMA possèdent un taux d'isotacticité étonnamment élevé (>90°C). Les rendements sont quantitatifs et la polymérisation contrôlée.

**Exemple 4: Reprise de polymérisation**

*Mode opératoire*

(a) Préparation de la première séquence PMMA vivant

On opère comme indiqué précédemment (mode opératoire général de polymérisation B) dans les conditions opératoires suivantes :
Quantités pour préparer le système d'amorçage A :

s-BuLi = 61,27 mM ; 47,1 ml
$D_3$ = 21,88 mM; 4,87 g.
Toluène

On utilise toute la solution.
[MMA] : 0,43 M ; 35 g
r = 2,8

Solvant = Toluène
Température de polymérisation = -25°C
Durée de polymérisation = 10 min.

On fait un prélèvement pour analyser les caractéristiques du polymère formé (voir tableau 2/4a)

(b) Formation de la deuxième séquence

On ajoute une deuxième dose (35 g) de MMA dans les mêmes conditions et on obtient le polymère après 30 min. de polymérisation. Les caractéristiques sont indiquées au tableau 2/4b.

Les résultats sont indiqués dans le Tableau 2.

Tableau 2

| Exemple | $\overline{Mn}_{exp}$ (g/mol) | Ip | ρ (%) | f (%) |
|---|---|---|---|---|
| 4a | 21260 | 1,48 | 100 | 95 |
| 4b | 41450 | 1,48 | 100 | 96 |

Ces résultats démontrent la stabilité des centres actifs en cours de polymérisation.

**Exemple 5: Essais avec une concentration élevée en monomère**

On a repris l'exemple 1 en utilisant une concentration en MMA de 2M.

Les résultats sont indiqués dans le Tableau 3.

Tableau 3

| Exemple | $\overline{Mn}_{exp}$ (g/mol) | Ip | ρ (%) | f (%) | Iso (%) |
|---|---|---|---|---|---|
| 5 | 16 300 | 1,55 | 100 | 88 | 90 |

Cet exemple montre la possibilité d'effectuer la polymérisation en solution à une concentration élevée en MMA, ce qui présente l'avantage d'être bon marché.

**Exemple 6 : Essai avec de fortes masses**

On a repris l'Exemple 1 avec un rapport molaire r = 2,8.
[MMA] = 2,57 mole/litre

Les résultats sont rapportés dans le Tableau 4.

Tableau 4

| Exemple | $\overline{Mn}_{exp}$ (g/mol) | Ip | ρ (%) | f (%) | Iso (%) |
|---|---|---|---|---|---|
| 6 | 79200 | 1,58 | 99 | 82 | 94 |

Cet exemple montre la possibilité de synthétiser des PMMA isotactiques de masse molaire $\overline{Mn}$ élevée, contrairement aux synthèses décrites par Hatada et al à basse température. Ainsi, on peut obtenir du PMMA hautement isotactique, possédant une distribution monomodale, même pour des masses molaires $\overline{Mn}$ élevées.

**Exemples 7 à 20 : Polymérisation anionique du MMA dans le toluène à 0°C**

*Mode opératoire général*

Le sec.-BuLi en solution dans l'hexane et $D_3$ ont été utilisés tels quels. Le MMA a été additionné d'une solution à 10 % en poids d'$AlEt_3$ dans l'hexane jusqu'à ce qu'une couleur jaunâtre persistante ait été observée, et il a été distillé avant polymérisation. On a purifié le toluène en le portant à reflux sur un complexe sodium-benzophénone frais et en le distillant juste avant l'utilisation.

Le système d'amorçage a été préparé in situ dans un réacteur en verre préalablement flambé sous atmosphère inerte, le monomère et le solvant étant transféré par une technique à seringue et capillaire :

Du $D_3$ a été introduit dans le réacteur, puis 5 ml de toluène et du sec.-BuLi ont été transférés dans le réacteur à l'aide d'une seringue en verre. Au bout de 20 heures à 20°C, 80 ml de toluène ont été ajoutés. La solution a été refroidie à 0°C et 4,2 g de MMA ont été ajoutés. La polymérisation a été effectuée pendant 1 heure, puis arrêtée par addition de méthanol. Les polymères ont été récupérés par précipitation dans le méthanol et séchés sous vide à 70°C pendant 24 heures.

Une chromatographie d'exclusion stérique (SEC) a été effectuée à l'aide d'un appareil Hewlett Packard 1090 équipé de colonnes 4PLgel ($10^4$, $10^3$, 100, 10 nm) employant du THF (tetrahydrofuranne) comme éluant et un détecteur d'indice de réfraction HP 1030 A. Le débit était de 10 ml/min. La masse molaire moyenne en nombre ($\overline{Mn}$) et l'indice de polymolécularité ($\overline{Mw}/\overline{Mn}$) ont été calculés à partir d'éluogrammes d'exclusion stérique sur la base d'un étalonnage par le polystyrène. La tacticité des chaînes de polymère a été déterminée par spectroscopie par RMN $^1$H à l'aide d'un spectromètre Bruker AN-400.

**Exemples 7 à 9**

On a étudié l'effet du type de butyllithium sur le système de polymérisation. Les conditions opératoires sont les suivantes :

[MMA] : 0,5 M
Durée de polymérisation : 1 h
Solvant : toluène
Température de polymérisation = 0°C

Les résultats sont rapportés dans le Tableau 5.

Tableau 5

| Exemple | $[BuLi]_o$ (mmol) | r | ρ (%) | $\overline{Mn}_{exp}$ | $\overline{Mw}/\overline{Mn}$ | Iso (%) |
|---|---|---|---|---|---|---|
| 7 | tert.-BuLi 3,15 | 3,16 | 100 | 13 200 | 2,1 | 81 |
| 8 | sec.-BuLi 3,42 | 3,13 | 100 | 21 700 | 1,1 | 85 |
| 9 (comparatif) | n-BuLi 3,25 | 3,25 | 0 | - | - | - |

**Exemples 10 à 16**

On a étudié l'effet du rapport r = $[sec\text{-}BuLi]_o/[D_3]$ sur le système de polymérisation.
[MMA] = 0,5 M
Durée de polymérisation = 1 h
Température de polymérisation = 0°C
Solvant = toluène

Les résultats sont rapportés dans le Tableau 6.

Tableau 6

| Exemple | $[sBuLi]_o$ (mmol) | r | ρ (%) | $\overline{Mn}_2$ ($\%P_2$) | $\overline{Mn}_1$ ($\%P_1$) | iso (%) |
|---|---|---|---|---|---|---|
| 10 | 7,40 | 5,92 | 98 | 57 000 (62) | 3 900 (38) | 86 |
| 11 | 1,23 | 4,34 | 98 | 250 400 (48) | 35 000 (52) | 78 |
| 12 | 2,05 | 3,68 | 100 | 177 300 (32) | 25 100 (68) | 85 |

Tableau 6 (suite)

| Exemple | $[sBuLi]_o$ (mmol) | r | ρ (%) | $\overline{Mn}_2$ ($\%P_2$) | $\overline{Mn}_1$ ($\%P_1$) | iso (%) |
|---|---|---|---|---|---|---|
| 13 | 2,88 | 3,53 | 100 | 141 700 (36) | 18300 (64) | 87 |
| 14 | 3,42 | 3,13 | 100 | 225 200 (12) | 21 700 (88) | 85 |
| 15 | 3,56 | 2,89 | 100 | - (~0) | 37 100 (100) | 93 |
| 16 | 3,28 | 2,78 | 95 | - (0) | 63 300 (100) | 90 |
| r = $[sec.\text{-}BuLi]_o/[D3]$ | | | | | | |

Suivant le rapport r, on observe la présence d'une ou de deux populations de masse distincte sur l'éluogramme de chromatographie d'exclusion stérique ;

- $P_1$ correspondant au pic de masse molaire en nombre ($\overline{Mn}_1$) la plus faible ;
- $P_2$ correspondant au pic de masse molaire en nombre ($\overline{Mn}_2$) la plus élevée ;
- % $P_1$ et % $P_2$ = pourcentage de $\overline{Mn}_1$ et de $\overline{Mn}_2$.

De préférence, r est choisi inférieur à 3 pour obtenir une distribution monomodale.

**Exemples 17 à 20**

On a repris les conditions du mode opératoire précisé pour les exemples 7 à 20 en modifiant la température et la nature du composé organométallique.

Les résultats sont présentés dans le Tableau 7.

Tableau 7

| Exemple | $[BuLi]_o$ (mmol) | r | T (°C) | ρ (%) | $\overline{Mn}_{exp}$ | $\overline{Mw}/\overline{Mn}$ | Iso (%) |
|---|---|---|---|---|---|---|---|
| 17 | sBuLi 3,56 | 2,89 | 0 | 100 | 37 100 | 1,1 | 93 |
| 18 | sBuLi 3,42 | 3,13 | 20 | 84 | 13 800 | - | 90 |
| 19 | sBuLi 3,56 | 2,89 | 20 | 86 | 36 000 | 1,2 | 85 |
| 20 | tBuLi 4,80 | 3,20 | 20 | 100 | 12 200 | 2,5 | 83 |

Les résultats montrent que le système est totalement contrôlé jusqu'à 0°C, mais montre la possibilité de travailler jusqu'à + 20°C environ.

**Exemples 21 à 24 : Homopolymérisation de l'acrylate de n-butyle.**

On a procédé comme au mode opératoire général des exemples 7 à 20 en remplaçant le MMA par le n-BuA et on a étudié les effets de la température de polymérisation et du rapport r = $[sec.\text{-}BuLi]_o/[D_3]$ (solvant : toluène).

Les résultats sont rapportés dans le Tableau 8.

Tableau 8

| Exemple | $[sec.\text{-}BuLi]_o$ (mmol) | r | T (°C) | t (min) | ρ (%) | $\overline{Mn}$ | $\overline{Mw}/\overline{Mn}$ |
|---|---|---|---|---|---|---|---|
| 21 | 3,29 | 2,77 | 0 | 25 | 48 | 34 000 | 1,4 |
| 22 | 3,29 | 2,77 | -20 | 45 | 90 | 90 000 | 1,4 |
| 23 | 3,29 | 2,77 | -40 | 20 | 96 | 44 000 | 1,2 |
| 24 | 3,29 | 2,77 | -78 | 30 | 95 | 29 000 | 1,2 |

Ces essais montrent qu'une température inférieure à -20°C est préférée pour la polymérisation quasi quantitative du nBuA.

**Exemple 25 : Copolymérisation séquencée du MMA et du nBuA**

a) on prépare une séquence de PMMA vivant dans le toluène, à -78°C, en utilisant un rapport r = 2,8. La durée de polymérisation est de 90 mn. On obtient une première séquence de $\overline{Mn}_1$ = 33000 g/mole
b) puis on ajoute le nBuA. La durée de polymérisation est de 60 mn. On obtient un produit séquencé final de masse molaire $\overline{Mn}_2$. Les autres conditions opératoires et les résultats sont indiqués au tableau 9.

Tableau 9

| Exemple | $[sec.\text{-}BuLi]_o$ (mmol) | [MMA (g) | [BuA] (g) | ρ (%) | $\overline{Mn}_1$ Bloc MMA | $\overline{Mn}_2$ Produit final | $\overline{Mw}/\overline{Mn}$ |
|---|---|---|---|---|---|---|---|
| 25 | 3,29 | 2,5 | 1,65 | 100 | 33 000 | 59 000 | 1,08 |

**Exemples 26 à 30 : Homopolymérisation de monomères diéniques et vinylaromatiques**

Les conditions opératoires étaient les suivantes:

Système d'amorçage : sec.-BuLi/$D_3$
Solvant : toluène
Durée de polymérisation : 15 h

Les résultats sont rapportés dans le Tableau 10. Les rendements en polymère étaient de 100% dans tous les cas.

Tableau 10

| Exemple | $[sec.\text{-}BuLi]_o$ (mmol) | r | $[Monomère]_o$ (mol/l) | T (°C) | $\overline{Mn}_{exp}$ | $\overline{Mw}/\overline{Mn}$ | Microstructure | |
|---|---|---|---|---|---|---|---|---|
| | | | | | | | 1,4 | 1,2 |
| 26 | 0,11 | 2,85 | Butadiène 0,98 | 40 | 52 000 | 1,05 | 91 % | 9 % |
| 27 | 0,29 | - | " | 40 | 20 000 | 1,03 | 91% | 9% |
| 28 | 0,43 | 3,33 | Styrène 1,14 | 40 | 13 600 | 1,30 | - | - |
| 29 | 0,26 | 3,19 | Isoprène 0,77 | 20 | 22 300 | 1,02 | 92 % | 8 % |
| 30 | 0,18 | 4 | " | 20 | 4 900 | 1,06 | 95 % | 5 % |

On note que l'on a conservé la microstructure du type 1,4 pour les diènes et l'activité du polystyrène.

**<u>Exemples 31 et 32</u> : Synthèse des copolymères P(isoprène-b-MMA)**

*Mode opératoire général* :

Les conditions opératoires étaient les suivantes :

Le polyisoprène est préparé comme à l'exemple 30.
Système d'amorçage : r = $[sec.\text{-}BuLi]_o/D_3$ comme indiqué au tableau 11.
Solvant : toluène

<u>Exemple 31</u> :

Durée de polymérisation : polyisoprène: 15 h à + 20°C ;
PMMA : 60 min à 0°C.

<u>Exemple 32</u> :

Durée de polymérisation : polyisoprène : 15 h à + 20°C ;
PMMA : 60 min à 20°C.

Les résultats sont rapportés dans le Tableau 11.

Tableau 11

| Exemple | Polyisoprène $\overline{Mw}$/Ip | r | % de conversion totale | Polymère biséquencé $\overline{Mw}$/Ip |
|---|---|---|---|---|
| 31 | 4 900 | 3,5 | 100 | 13 800 / 1,2 |
| 32 | 5 700 / 1,05 | 3,5 | 90 | 15 400 / 1,1 |

L'introduction du MMA après la polymérisation de l'isoprène permet de préparer des copolymères biséquencés ayant un Ip étroit en s'affranchissant de la technique dite du "end-capping" (technique habituellement utilisée pour diminuer la réactivité des carbanions à l'extrémité des chaînes diéniques avant l'amorçage des (méth)acrylates. Le 1,1-diphénylethylène est habituellement utilisé dans ce but.

## Revendications

1. Système d'amorçage pour la (co)polymérisation anionique de monomères (méth)acryliques, vinylaromatiques et/ou diéniques, comprenant le produit de réaction

**a) d'au moins un siloxane cyclique de formule 1 :**

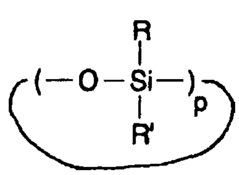

(I)

dans laquelle :

- R et R', identiques ou différents, représentent, chacun, un radical alkyle, linéaire ou ramifié, en C1-C6 ou bien un radical aryle, un radical arylalkyle ou alkylaryle dans lesquels le groupe alkyle a de 1 à 6 atomes de carbone et
- p est un nombre entier de 3 à 6 représentant le nombre de motifs siloxane,

**b) d'au moins un composé organométallique choisi parmi :**

- **(1)** les composés monofonctionnels de formule (II) :

$$(R^1)_u\text{—M M} \qquad \text{(II)}$$

dans laquelle :

- $R^1$ représente un radical alkyle à chaîne ramifiée contenant 3 à 6 atomes de carbone ; ou un radical aryle à un ou plusieurs cycles, éventuellement substitué ; ou un radical alcényle en $C_2$-$C_6$ substitué par aryle ou alkylaryle ; ou un radical alkyle, linéaire ou ramifié, contenant 1 à 6 atomes de carbone, substitué par au moins un groupe phényle ou bien un radical alkylaryle dans lequel le groupe alkyle a de 1 à 6 atomes de carbone ;
- M désigne un métal alcalin ou alcalino-terreux, la valence u étant respectivement de 1 ou 2.

- **(2)** les composés difonctionnels de formule (III):

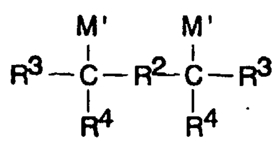

(III)

dans laquelle :

- M' est un métal alcalin ;
- $R^2$ représente un radical organique divalent, aliphatique, cycloaliphatique, aromatique ou comportant au moins un groupement cycloaliphatique ou aromatique, $R^2$ pouvant comporter des substituants;
- $R^3$ et $R^4$ représentent chacun indépendamment un radical organique monovalent, aliphatique, cycloaliphatique, aromatique ou comportant au moins un groupement cycloaliphatique ou aromatique, $R^3$ et $R^4$ pouvant comporter des substituants ;
- **(3)** les composés silylés monofonctionnels de formule (IV) :

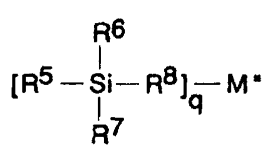

(IV)

dans laquelle :

- $R^5$, $R^6$, $R^7$ représentent, chacun, indépendamment, un radical alkyle, linéaire ou ramifié, contenant 1 à 6 atomes de carbone ;
- $R^8$ représente un radical alkylène, linéaire ou ramifié, contenant 1 à 6 atomes de carbone ;
- M" désigne un métal alcalin ou alcalino-terreux, la valence q étant respectivement de 1 ou 2 ; et
- **(4)** les composés silylés difonctionnels de formule (V) :

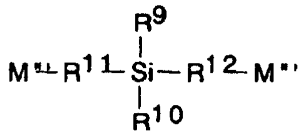

(V)

dans laquelle :

- $R^9$ et $R^{10}$ représentent, chacun, indépendamment, un radical alkyle, linéaire ou ramifié, contenant 1 à 6 atomes de carbone ;
- $R^{11}$ et $R^{12}$ représentent, chacun, indépendamment, un radical alkylène, linéaire ou ramifié, contenant 1 à 6 atomes de carbone ; et
- M''' désigne un métal alcalin,

**le rapport molaire r** = no/n, dans lequel no est le nombre de moles de sites actifs dérivant du composé organométallique réagissant avec n moles de composé siloxane cyclique, est compris entre 0,8p et 2p, p représentant le nombre de motifs siloxane.

**2.** Système d'amorçage selon la revendication 1, **caractérisé par le fait que** les composés monofonctionnels (1) sont choisis parmi le sec.butyllithium et le tert.butyllithium.

**3.** Système d'amorçage selon la revendication 1, **caractérisé par le fait que** les composés difonctionnels (2) sont choisis parmi le 1,1 ,4,4-tétraphényl-1 ,4-dilithiobutane et le 1,1,4,4-tétraphényl-1,4-disodiobutane.

**4.** Système d'amorçage selon la revendication 1, **caractérisé par le fait que** dans les composés de formules (IV) et (V), $R^5$, $R^6$, $R^7$, $R^9$ et $R^{10}$ représentent, chacun, un méthyle et $R^8$, $R^{11}$ et $R^{12}$ représentent, chacun, un méthylène et M'' et M''' représentent, chacun, le lithium.

**5.** Système d'amorçage selon la revendication 1, **caractérisé en ce que** le composé organométallique est choisi parmi les précurseurs difonctionnels, naphtalène lithium, naphtalène sodium et naphtalène potassium.

**6.** Système d'amorçage selon l'une des revendications 1 à 5 **caractérisé par le fait qu'**il est préparé à partir de sec.-butyllithium et d'hexaméthylcyclotrisiloxane ($D_3$), à partir de tert-butyllithium ou de triméthylsilylméthyllithium (TMSM-Li) et d'hexaméthyl-cyclotrisiloxane, à partir de sec.-BuLi et d'octaméthylcyclotétrasiloxane ($D_4$), ou à partir de tert.-BuLi ou de TMSM-Li et de $D_4$.

**7.** Procédé de préparation du système d'amorçage conforme à l'une des revendications 1 à 6, **caractérisé en ce que** l'on fait réagir n moles de siloxane cyclique et no moles de sites actifs dérivant du composé organométallique, à température ambiante pendant une durée suffisante pour atteindre l'équilibre favorable à l'espèce thermodynamiquement stable, le rapport no/n étant compris entre 0,8p et 2p, p étant un nombre entier de 3 à 6 représentant le nombre de motifs silocane.

**8.** Procédé conforme à la revendication 7, **caractérisé en ce que** le mélange a lieu en milieu apolaire.

**9.** Procédé de (co)polymérisation anionique de monomères (méth)acryliques, vinylaromatiques et/ou diéniques, **caractérisé par le fait qu'**on conduit la polymérisation en présence d'un système d'amorçage tel que défini à l'une des revendications 1 à 6.

**10.** Procédé selon la revendication 9, **caractérisé par le fait qu'**il est conduit à une température de -78°C à +25°C.

**11.** Procédé selon l'une des revendications 9 et 10, **caractérisé par le fait qu'**il est conduit dans au moins un solvant aprotique, polaire ou apolaire, de préférence majoritairement apolaire.

**12.** Procédé selon la revendication 11, **caractérisé par le fait que** le solvant est choisi parmi le benzène, le toluène, l'éthylbenzène, le tétrahydrofuranne, le diglyme, le tétraglyme, l'orthoterphényle, le biphényle, la décaline, la tétraline ou leurs mélanges, en particulier le toluène, l'éthylbenzène ou un mélange toluène-tétrahydrofuranne ou éthylbenzène-tétrahydrofuranne contenant jusqu'à 10% en volume de tétrahydrofuranne.

**13.** Procédé selon l'une des revendications 9 à 12, **caractérisé par le fait que** les monomères (méth)acryliques sont choisis parmi les (méth)acrylates des formules respectivement :

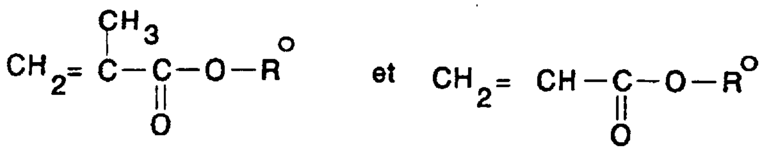

dans lesquelles $R^0$ est choisi parmi les radicaux alkyle en $C_1$-$C_{18}$, linéaires ou ramifiés, primaires, secondaires ou tertiaires, cycloalkyle en $C_5$-$C_{18}$, alcoxyalkyle ou alkylthioalkyle dans lesquels les groupes alkyle, linéaires ou ramifiés, ont de 1 à 18 atomes de carbone, aryle et arylalkyle, ces radicaux étant éventuellement substitués par au moins un atome de fluor et/ou au moins un groupe hydroxyle après protection de ce groupe hydroxyle ; les (méth)acrylates de glycidyle, de norbornyle, d'isobomyle, les mono- et di-(alkyl en $C_1$-$C_{18}$).(méth)acrylamides.

**14.** Procédé selon la revendication 13, **caractérisé par le fait que** les monomères méthacryliques sont choisis parmi les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de p-hydroxy-éthyle, d'isobornyle, d'hydroxypropyle, d'hydroxybutyle.

**15.** Procédé selon la revendication 13, **caractérisé par le fait que** les monomères acryliques sont choisis parmi les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

**16.** Procédé selon l'une des revendications 9 à 12, **caractérisé par le fait que** les monomères vinylaromatiques sont choisis parmi le styrène, le vinyltoluène, l'alphaméthylstyrène, le méthyl-4-styrène, le méthyl-3-styrène, le méthoxy-4-styrène, 'hydroxyméthyl-2-styrène, l'éthyl-4-styrène, l'éthoxy-4-styrène, le diméthyl-3,4-styrène et le vinyl-1-naphtalène.

**17.** Procédé selon l'une des revendications 9 à 12, **caractérisé par le fait que** les monomères diéniques sont choisis parmi le butadiène, le 2,3-diméthylbutadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbomène, les 2-alkyl-2,5-norbornadiènes, le 5-éthylène-2-norbomène, le 5-(2-propényl)-2-norbornène, le 5-(5-hexényl)-2-norbornène.

**18.** Procédé selon l'une des revendications 9 à 13 **caractérisé par le fait qu'**il conduit à un poly(méthacrylate de méthyle) ayant un pourcentage en triades isotactiques supérieur ou égal à 75 %.

**19.** Procédé selon l'une des revendications 9 à 13, **caractérisé par le fait qu'**il conduit à des copolymères séquencés poly(méthacrylate de méthyle-b-acrytate de n-butyle), le bloc de poly(méthacrylate de méthyle) comportant une teneur en triades isotactiques d'au moins 75 %.

**20.** Procédé selon l'une des revendications 9 à 12, **caractérisé par le fait qu'**il conduit à des copolymères séquencés polydiénique ou vinylaromatique -b-méthacrylique.

**21.** Procédé selon la revendication 20, **caractérisé par le fait qu'**il conduit à des copolymères séquencés polydiénique ou vinyfaromatique -b-méthacrylate de méthyle, le bloc de poly(méthacrylate de méthyle) comportant une teneur en triades isotactiques d'au moins 75 %.

**22.** Procédé selon l'une des revendications 20 ou 21, **caractérisé par le fait que** l'amorçage du monomère méthacrylate se fait directement sur la séquence polydiénique ou polyvinylaromatique vivante sans l'addition d'un composé diminuant la réactivité des carbanions à l'extrémité des séquences vivantes.

**23.** Copolymère biséquencé formé uniquement d'une séquence polymère dérivant d'un monomère diénique ou vinylaromatique et d'une séquence poly(métriacrylate de méthyle) ayant une teneur en triades isotactiques d'au moins 75 %.

**24.** Copolymère biséquencé conforme à la revendication 23, **caractérisé en ce qu'**il comprend une séquence diénique ayant une teneur en microstructure -1,4 d'au moins 90 %.

**Patentansprüche**

**1.** Initiatorsystem für die anionische (Co)polymerisation von (Meth)acrylmonomeren, vinylaromatischen Monomeren und/oder Dienmonomeren, das das Reaktionsprodukt

a) mindestens eines cyclischen Siloxans der Formel (I):

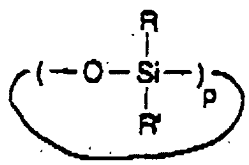 (I),

worin bedeuten:

- die Gruppen R und R', die gleich oder verschieden sind, eine geradkettige oder verzweigte $C_{1-6}$-Alkylgruppe, eine Arylgruppe oder eine Arylalkylgruppe oder Alkylarylgruppe,worin die Alkylgruppen 1 bis 6 Kohlenstoffatome aufweisen, und
- p eine ganze Zahl von 3 bis 6, die die Anzahl der Siloxaneinheiten angibt, und

b) mindestens einer metallorganischen Verbindung enthält, die ausgewählt ist unter:

(1) monofunktionellen Verbindungen der Formel (II):

$$(R^1)_u—M \quad (II),$$

worin bedeuten:

- $R^1$ eine Alkylgruppe mit verzweigter Kette, die 3 bis 6 Kohlenstoffatome enthält; eine Arylgruppe mit einem oder mehrereh Ringen, die gegebenenfalls substituiert ist; eine Alkenylgruppe mit 2 bis 6 Kohlenstoffatomen, die mit Aryl oder Alkylaryl substituiert ist; eine geradkettige oder verzweigte Alkylgruppe mit 1 bis 6 Kohlenstoffatomen, die mit mindestens einer Phenylgruppe oder einer Alkylarylgruppe substituiert ist, worin die Alkylgruppe 1 bis 6 Kohlenstoffatome aufweist; und
- M ein Alkalimetall oder Erdalkalimetall, wobei die Valenz u 1 oder 2 entspricht;

(2) bifunktionellen Verbindungen der Formel (III):

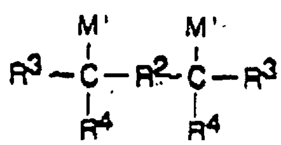 (III),

worin bedeuten:

- M' ein Alkalimetall;
- $R^2$ eine zweiwertige, aliphatische, cycloaliphatische oder aromatische organische Gruppe oder eine zweiwertige organische Gruppe, die mindestens eine cycloaliphatische oder aromatische Gruppe enthält, wobei $R^2$ Substituenten aufweisen kann;

- $R^3$ und $R^4$ jeweils unabhängig voneinander eine einwertige, aliphatische, cycloaliphatische oder aromatische organische Gruppe oder eine organische Gruppe, die mindestens eine cycloaliphatische oder aromatische Gruppe enthält, wobei $R^3$ und $R^4$ Substituenten aufweisen können;

(3) monofunktionellen silylierten Verbindungen der Formel (IV):

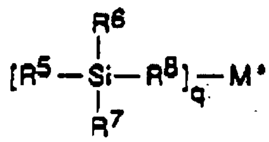

(IV),

worin bedeuten:

- $R^5$, $R^6$ und $R^7$ jeweils unabhängig voneinander eine geradkettige oder verzweigte Alkylgruppe mit 1 bis 6 Kohlenstoffatomen;
- $R^8$ eine geradkettige oder verzweigte Alkylengruppe mit 1 bis 6 Kohlenstoffatomen;
- M" ein Alkalimetall oder Erdalkalimetall, wobei die Valenz q 1 bzw. 2 bedeutet; und

(4) bifunktionellen silylierten Verbindungen der Formel (V):

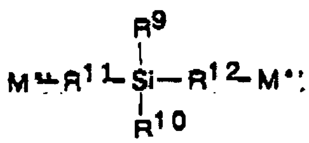

(V),

worin bedeuten:

- $R^9$ und $R^{10}$ jeweils unabhängig voneinander eine geradkettige oder verzweigte Alkylgruppe mit 1 bis 6 Kohlenstoffatomen;
- $R^{11}$ und $R^{12}$ jeweils unabhängig voneinander eine geradkettige oder verzweigte Alkylengruppe mit 1 bis 6 Kohlenstoffatomen; und
- M"' ein Alkalimetall,

wobei das Molverhältnis r = n0/n, worin n0 die Molzahl der von der metallorganischen Verbindung abgeleiteten reaktiven Stellen bedeutet, die mit n Mol der cyclischen Siloxanverbindung reagieren, im Bereich von 0,8 bis 2 p liegt, wobei p die Anzahl der Siloxaneinheiten bedeutet.

2. Initiatorsystem nach Anspruch 1, **dadurch gekennzeichnet, dass** die monofunktionellen Verbindungen (1) unter sek-Butyllithium und t-Butyllithium ausgewählt sind.

3. Initiatorsystem nach Anspruch 1, **dadurch gekennzeichnet, dass** die bifunktionellen Verbindungen (2) unter 1,1,4,4-Tetraphenyl-1,4-dilithiumbutan und 1,1 ,4,4-Tetraphenyl-1,4-dinatriumbutan ausgewählt sind.

4. Initiatorsystem nach Anspruch 1, **dadurch gekennzeichnet, dass** in den Verbindungen der Formeln (IV) und (V) die Gruppen $R^5$, $R^6$, $R^7$, $R^9$ und $R^{10}$ jeweils Methyl bedeuten, die Gruppen $R^8$, $R^{11}$ und $R^{12}$ jeweils Methylen bedeuten und M" und M"' Lithium bedeuten.

5. Initiatorsystem nach Anspruch 1, **dadurch gekennzeichnet, dass** die metallorganische Verbindung unter den bifunktionellen Precursoren Naphthalin-Lithium, Naphthalin-Natrium und Naphthalin-Kalium ausgewählt sind.

6. Initiatorsystem nach einem der Ansprüche 1 bis 5, **dadurch gekennzeichnet, dass** es ausgehend von sek-Butyllithium und Hexamethylcyclotrisiloxan ($D_3$), ausgehend von t-Butyllithium oder Trimethylsiylmethyllithium (DMSM-Li) und Hexamethylcyclotrisiloxan, ausgehend von sek-BuLi und Octamethylcyclotetrasiloxan ($D_4$) oder ausgehend von t-BuLi oder TMSM-Li und $D_4$ hergestellt wird.

7. Verfahren zur Herstellung eines Initiatorsystems nach einem der Ansprüche 1 bis 6, **dadurch gekennzeichnet, dass** n Mol cyclisches Siloxan und n0 Mol der von der metallorganischen Verbindung stammenden reaktiven Stellen bei Umgebungstemperatur während einer Zeitspanne, die ausreichend ist, um das für die thermodynamisch stabile Spezies günstige Gleichgewicht zu erreichen, umgesetzt wird, wobei das Verhältnis n0/n im Bereich von 0,8 p bis 2 p liegt, wobei p eine ganze Zahl im Bereich von 3 bis 6 bedeutet und die Anzahl der Siloxaneinheiten repräsentiert.

8. Verfahren nach Anspruch 7, **dadurch gekennzeichnet, dass** das Mischen in einem apolaren Medium erfolgt.

9. Verfahren zur anionischen (Co)polymerisation von (Meth)acrylmoriomeren, vinylaromatischen Monomeren und/ oder Dienmonomeren, **dadurch gekennzeichnet, dass** die Polymerisation in Gegenwart eines Initiatorsystems nach einem der Ansprüche 1 bis 6 durchgeführt wird.

10. Verfahren nach Anspruch 9, **dadurch gekennzeichnet, dass** es bei einer Temperatur von -78 bis +25 °C durchgeführt wird.

11. Verfahren nach einem der Ansprüche 9 und 10, **dadurch gekennzeichnet, dass** es in mindestens einem aprotischen, polaren oder apolaren und vorzugsweise hauptsächlich apolaren Medium durchgeführt wird.

12. Verfahren nach Anspruch 11, **dadurch gekennzeichnet, dass** das Lösungsmittel unter Benzol, Toluol, Ethylbenzol, Tetrahydrofuran, Diglyme, Tetraglyme, o-Terphenyl, Biphenyl, Decalin, Tetralin oder deren Gemischen und insbesondere Toluol, Ethylbenzol oder einem Gemisch von Toluol und Tetrahydrofuran oder Ethylbenzol und Tetrahydrofuran mit bis zu 10 Vol.-% Tetrahydrofuran ausgewählt ist.

13. Verfahren nach einem der Ansprüche 9 bis 12, **dadurch gekennzeichnet, dass** die (Meth)acrylmonomere unter den (Meth)acrylaten der folgenden Formeln:

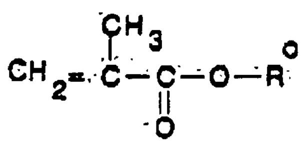 und 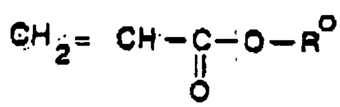 ,

wobei in den Formeln $R^0$ unter den geradkettigen oder verzweigten, primären, sekundären oder tertiären C1-18-Alkylgruppen, $C_{5-18}$-Cycloalkyl, Alkoxyalkyl oder Alkylthioalkyl, wobei die geradkettigen oder verzweigten Alkylgruppen dieser Gruppen 1 bis 18 Kohlenstoffatome aufweisen, Aryl und Arylalkyl ausgewählt sind, wobei diese Gruppen gegebenenfalls mit mindestens einem Fluoratom und/oder mindestens einer Hydroxygruppe (nach Schützen dieser Hydroxygruppe) substituiert sind; Glycidyl(meth)acrylat, Norbornyl(meth)acrylat-, Isobornyl(meth)-acrylat, und Mono-und Di- $(C_{1-18})$-(meth)acrylamiden ausgewählt sind.

14. Verfahren nach-Anspruch 13, **dadurch gekennzeichnet, dass** die Methacrylmonomere-unter Methylmethacrylat, Ethylmethacrylat, 2,2,2-Trifluorethylmethacrylat, n-Propylmethacrylat, Isopropylmethacrylat. n-Butylmethacrylat, sek-Butylmethacrylat, *t*-Butylmethacrylat, n-Amylmethacrylat, i-Amylmethacrylat, n-Hexylmethacrylat, 2-Ethylhexylmethacrylat, Cyclohexylmethacrylat, Octylmethacrylat, i-Octylmethaciylat, Nonylmethacrylat, Decylmethacrylat, Laurylmethacrylat, Stearylmethacrylat, Phenylmethacrylat, Benzylmethacrylat, β-Hydroxyethylmethacrylat, Isobomylniethacrylat, Hydroxypropylmethacrylat und Hydroxybutylmethacrylat ausgewählt sind.

15. Verfahren nach Anspruch 13, **dadurch gekennzeichnet, dass** die Acrylmonomere unter Methylacrylat, Ethylacrylat, n-Propylacrylat, Isopropylacrylat, n-Butylacrylat, sek-Butylacrylat, t-Butylacrylat, Hexylacrylat, 2-Ethylhexylacrylat, Isooctylacrylat, 3,3,5-Trimethylhexylacrylat, Nonylacrylat, Isodecylacrylat, Laurylacrylat, Octadecylacrylat, Cyclohexylacrylat, Phenylacrylat, Methoxymethylacrylat, Methoxyethylacrylat, Ethoxymethylacrylat und Ethoxyethylacrylat ausgewählt sind.

16. Verfahren nach einem der Ansprüche 9 bis 12, **dadurch gekennzeichnet, dass** die vinylaromatischen Monomere unter Styrol, Vinyltoluol, Methylstyrol, 4-Methylstyrol, 3-Methylstyrol, 4-Methoxystyrol, 2-Hydroxymethylstyrol, 4-Ethylstyrol, 4-Ethoxystyrol, 3,4 Dimethylstyrol und 1-Vinylnaphthalin ausgewählt sind.

**17.** Verfahren nach einem der Ansprüche 9 bis 12, **dadurch gekennzeichnet, dass** die Dienmonomere unter Butadien, 2,3-Dimethylbutadien, Isoprene, 1,3-Pentadien, 1,4-Pentadien, 1,4-Hexadien. 1,5-Hexadien, 1,9-Decadien, 5-Methylen-2-norbornen; 5-Vinyl-2-norbormen, 2-Alkyl-2-5-norbornadienen, 5-Ethylen-2-norbornen, 5-(2-Propenyl)-2-norbornen und 5-(5-Hexenyl)-2-norbornen ausgewählt sind.

**18.** Verfahren nach einem der Ansprüche 9 bis 13, **dadurch gekennzeichnet, dass** es zu einem Poly(methylmethacrylat) mit einem prozentualen Anteil an isotaktischen Triaden von 75 % oder darüber führt.

**19.** Verfahren nach einem der Ansprüche 9 bis 13, **dadurch gekennzeichnet; dass** es zu sequentiellen Copolymeren Poly(methylmethacrylat-b-n-Butylacrylat) führt, wobei der Poly(methylmethacrylät)-Block einen Gehalt an isotaktischen Triaden von mindestens 75 % aufweist.

**20.** Verfahren nach einem der Ansprüche 9 bis 12, **dadurch gekennzeichnet, dass** es zu sequentiellen Polydien oder vinylaromatischen-b-Methacryl-Copolymeren führt.

**21.** Verfahren nach Anspruch 20, **dadurch gekennzeichnet, dass** es zu sequentiellen Polydien oder vinylaromatischen -b-Methylmethacrylat-Copolymeren führt, wobei der Poly(methylmethacrylat)-Block einen Gehalt an isotaktischen Triaden von mindestens 75% aufweist.

**22.** Verfahren nach einem der Ansprüche 20 oder 21, **dadurch gekennzeichnet, dass** die Initiation des Methacrylat-Monomers direkt an der lebenden Polydiensequenz oder polyvinylaromatischen Sequenz ohne Zugabe einer Verbindung erfolgt, die die Reaktivität der Carbanionen'an den Enden der lebenden Ketten vermindert.

**23.** Bisequentielles Copolymer, das aus einer Polymersequenz, die von einem Dienmonomer oder vinylaromatischen Monomer abgeleitet, und einer Poly(methylmethacrylat)-Sequenz mit einem Gehalt an isotaktischen Triaden von mindestens 75 % gebildet ist.

**24.** Bisequentielles Copolymer nach Anspruch 23, **dadurch gekennzeichnet, dass** es eine Diensequenz mit einem prozentualen Anteil der 1, 4-Mikrostruktur von mindestens 90 % enthält.

**Claims**

**1.** Initiator system for the anionic (co)polymerization of (meth)acrylic, vinylaromatic and/or diene monomers, comprising the reaction product

**a) of at least one cyclic siloxane of formula I:**

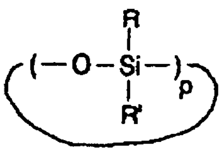 (I)

in which:

- R and R', which are identical or different, each represent a linear or branched $C_1$-$C_6$ alkyl radical or else an aryl radical, an arylalkyl radical or an alkylaryl radical in which the alkyl group has from 1 to 6 carbon atoms, and
- p is an integer from 3 to 6 representing the number of siloxane units,

**b) of at least one organometallic compound chosen from:**

- (1) monofunctional compounds of formula (II):

$$(R^1)_u\text{-}M \qquad (II)$$

in which:

- $R^1$ represents an alkyl radical with a branched chain comprising 3 to 6 carbon atoms; or an optionally substituted aryl radical comprising one or more rings; or a $C_2$-$C_6$ alkenyl radical substituted by aryl or alkylaryl; or a linear or branched alkyl radical comprising 1 to 6 carbon atoms which is substituted by at least one phenyl group or else one alkylaryl radical in which the alkyl group has from 1 to 6 carbon atoms;
- M denotes an alkali or alkaline earth metal, the valency u being respectively 1 or 2;

- **(2)** difunctional compounds of formula (III):

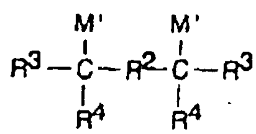

(III)

in which:

- M' is an alkali metal;
- $R^2$ represents an aliphatic, cycloaliphatic or aromatic divalent organic radical or a divalent organic radical comprising at least one cycloaliphatic or aromatic group, it being possible for $R^2$ to comprise substituents;
- $R^3$ and $R^4$ each independently represent an aliphatic, cycloaliphatic or aromatic monovalent organic radical or a monovalent organic radical comprising at least one cycloaliphatic or aromatic group, it being possible for $R^3$ and $R^4$ to comprise substituents;

- **(3)** monofunctional silyl compounds of formula (IV):

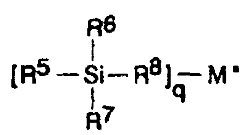

(IV)

in which:

- $R^6$ and $R^7$ each independently represent a linear or branched alkyl radical comprising 1 to 6 carbon atoms;
- $R^8$ represents a linear or branched alkylene radical comprising 1 to 6 carbon atoms;
- M'' denotes an alkali or alkaline earth metal, the valency q being respectively 1 or 2; and

- (4) difunctional silyl compounds of formula (V):

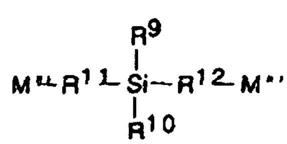

(V)

in which:

- $R^9$ and $R^{10}$ each independently represent a linear or branched alkyl radical comprising 1 to 6 carbon atoms;
- $R^{11}$ and $R^{12}$ each independently represent a linear or branched alkylene radical comprising 1 to 6 carbon atoms; and
- M''' denotes an alkali metal,

**the molar ratio r** = nu/n, in which nu is the number of moles of active sites deriving from the organometallic compound reacting with n mol of cyclic siloxane compound, being between 0.8p and 2p, p representing the number of siloxane units.

**2.** Initiator system according to Claim 1, **characterized in that** the monofunctional compounds (1) are chosen from sec-butyllithium and tert-butyllithium.

**3.** Initiator system according to Claim 1, **characterized in that** the difunctional compounds (2) are chosen from 1,1,4,4-tetraphenyl-1,4-dilithiobutane and 1,1,4,4-tetraphenyl-1,4-disodiobutane.

**4.** Initiator system according to Claim 1, **characterized in that**, in the compounds of formulae (IV) and (V), $R^5$, $R^6$, $R^7$, $R^9$ and $R^{10}$ each represent a methyl and $R^8$, $R^{11}$ and $R^{12}$ each represent a methylene and M'' and M''' each represent lithium.

**5.** Initiator system according to Claim 1, **characterized in that** the organometallic compound is chosen from lithium naphthalene, sodium naphthalene and potassium naphthalene difunctional precursors.

**6.** Initiator system according to one of Claims 1 to 5, **characterized in that** it is prepared from sec-butyllithium and hexamethylcyclotrisiloxane ($D_3$), from tert-butyllithium or trimethylsilylmethyllithium (TMSM-Li) and hexamethylcyclotrisiloxane, from sec-BuLi and octamethylcyclotetrasiloxane ($D_4$) or from tert-BuLi or TMSM-Li and $D_4$.

**7.** Process for the preparation of the initiator system in accordance with one of Claims 1 to 6, **characterized in that** n mol of cyclic siloxane and nu mol of active sites deriving from the organometallic compound are reacted at ambient temperature for a time sufficient to reach the equilibrium favourable to the thermodynamically stable entity, the ratio nu/n being between 0.8p and 2p, p being an integer from 3 to 6 representing the number of siloxane units.

**8.** Process in accordance with Claim 7, **characterized in that** mixing takes place in a nonpolar medium.

**9.** Process for the anionic (co)polymerization of (meth)acrylic, vinylaromatic and/or diene monomers, **characterized in that** the polymerization is carried out in the presence of an initiator system as defined in one of Claims 1 to 6.

**10.** Process according to Claim 9, **characterized in that** it is carried out at a temperature of -78°C to +25°C.

**11.** Process according to either of Claims 9 and 10, **characterized in that** it is carried out in at least one polar or nonpolar aprotic solvent, preferably a predominantly nonpolar aprotic solvent.

**12.** Process according to Claim 11, **characterized in that** the solvent is chosen from benzene, toluene, ethylbenzene, tetrahydrofuran, diglyme, tetraglyme, ortho-terphenyl, biphenyl, decalin, tetralin or their mixtures, in particular toluene, ethylbenzene or a toluene-tetrahydrofuran or ethylbenzene-tetrahydrofuran mixture comprising up to 10% by volume of tetrahydrofuran.

**13.** Process according to one of Claims 9 to 12, **characterized in that** the (meth)acrylic monomers are chosen from (meth)acrylates respectively of the formulae:

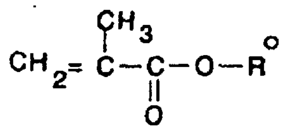

and

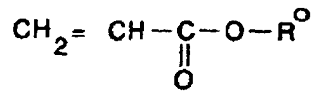

in which R° is chosen from primary, secondary or tertiary and linear or branched $C_1$-$C_{18}$ alkyl radicals, $C_5$-$C_{18}$ cycloalkyl radicals, alkoxyalkyl or alkylthioalkyl radicals in which the linear or branched alkyl groups have from 1 to 18 carbon atoms, aryl radicals and arylalkyl radicals, these radicals optionally being substituted by at least one fluorine atom and/or at least one hydroxyl group after protection of this hydroxyl group; glycidyl, norbornyl or isobornyl (meth)acrylates or mono- and di($C_1$-$C_{18}$ alkyl)(meth)acrylamides.

**14.** Process according to Claim 13, **characterized in that** the methacrylic monomers are chosen from methyl, ethyl, 2,2,2-trifluoroethyl, n-propyl, isopropyl, n-butyl, sec-butyl, tert-butyl, n-amyl, isoamyl, n-hexyl, 2-ethylhexyl, cyclohexyl, octyl, isooctyl, nonyl, decyl, lauryl, stearyl, phenyl, benzyl, β-hydroxyethyl, isobornyl, hydroxypropyl or hydroxybutyl methacrylates.

**15.** Process according to Claim 13, **characterized in that** the acrylic monomers are chosen from methyl, ethyl, n-propyl, isopropyl, n-butyl, sec-butyl, tert-butyl, hexyl, 2-ethylhexyl, isooctyl, 3,3,5-trimethylhexyl, nonyl, isodecyl, lauryl, octadecyl, cyclohexyl, phenyl, methoxymethyl, methoxyethyl, ethoxymethyl and ethoxyethyl acrylates.

**16.** Process according to one of Claims 9 to 12, **characterized in that** the vinylaromatic monomers are chosen from styrene, vinyltoluene, α-methylstyrene, 4-methylstyrene, 3-methylstyrene, 4-methoxystyrene, 2-(hydroxymethyl) styrene, 4-ethylstyrene, 4-ethoxystyrene, 3,4-dimethylstyrene and 1-vinylnaphthalene.

**17.** Process according to one of Claims 9 to 12, **characterized in that** the diene monomers are chosen from butadiene, 2,3-dimethylbutadiene, isoprene, 1,3-pentadiene, 1,4-pentadiene, 1,4-hexadiene, 1,5-hexadiene, 1,9-decadiene, 5-methylene-2-norbornene, 5-vinyl-2-norbornene, 2-alkyl-2,5-norbornadienes, 5-ethylene-2-norbornene, 5-(2-propenyl)-2-norbornene or 5-(5-hexenyl)-2-norbornene.

**18.** Process according to one of Claims 9 to 13, **characterized in that** it results. in a poly(methyl methacrylate) having a percentage of isotactic triads of greater than or equal to 75%.

**19.** Process according to one of Claims 9 to 13, **characterized in that** it results in poly(methyl methacrylate-b-n-butyl acrylate) block copolymers, the poly(methyl methacrylate) block comprising a content of isotactic triads of at least 75%.

**20.** Process according to one of Claims 9 to 12, **characterized in that** it results in poly(diene or vinylaromatic-b-methacrylic) block copolymers.

**21.** Process according to Claim 20, **characterized in that** it results in poly(diene or vinylaromatic-b-methyl methacrylate) block copolymers, the poly(methyl methacrylate) block comprising a content of isotactic triads of at least 75%.

**22.** Process according to either of Claims 20 and 21, **characterized in that** the initiation of the methacrylate monomer takes place directly on the living polydiene or polyvinylaromatic block without the addition of a compound which reduces the reactivity of the carbanions at the ends of the living blocks.

**23.** Diblock copolymer formed solely of a polymer block deriving from a diene or vinylaromatic monomer and of a poly (methyl methacrylate) block having a content of isotactic triads of at least 75%.

**24.** Diblock copolymer in accordance with Claim 23, **characterized in that** it comprises a diene block having a content of 1,4- microstructure of at least 90%.